# EUROPÄISCHE PATENTSCHRIFT

(11) **EP 3 113 921 B1**
(45) Veröffentlichungstag und Bekanntmachung des Hinweises auf die Patenterteilung: **01.08.2018**
(21) Anmeldenummer: 15707979.9
(22) Anmeldetag: 06.03.2015
(51) Int. Cl.: B29B 11/16, B29L 31/00

(54) **VORRICHTUNG UND VERFAHREN ZUR HERSTELLUNG VON VORFORMLINGEN**
APPARATUS AND METHOD FOR PRODUCING PREFORMS
DISPOSITIF ET PROCÉDÉ DE FABRICATION DE PRÉFORMES

(30) Priorität: 06.03.2014 DE 102014002950
(43) Veröffentlichungstag der Anmeldung: 11.01.2017
(73) Patentinhaber: Broetje-Automation GmbH, 26180 Rastede (DE)
(72) Erfinder: REINHOLD, Raphael, 26409 Wittmund (DE); MEYER, Lars, 26180 Rastede (DE)
(74) Vertreter: Gottschald, Jan
(86) Internationale Anmeldenummer: PCT/EP2015/054695
(87) Internationale Veröffentlichungsnummer: WO 2015/132371

(56) Entgegenhaltungen:
- EP-A1- 2 722 145
- EP-A2- 2 374 607
- WO-A1-2011/039484
- WO-A2-2010/007417
- DE-A1-102012 206 020

## Beschreibung

Die Erfindung betrifft eine Vorrichtung zur Herstellung von Vorformlingen aus faserverstärktem Kunststoff gemäß dem Oberbegriff von Anspruch 1 sowie ein Verfahren zur Herstellung von Vorformlingen aus faserverstärktem Kunststoff gemäß dem Oberbegriff von Anspruch 15.

Faserverstärkte Kunststoffe, zu denen in erster Linie glasfaserverstärkte Kunststoffe (GFK) sowie kohlenstoffverstärkte Kunststoffe (CFK) zählen, erlangen eine zunehmende Bedeutung als Ersatz für herkömmliche Strukturmaterialien aus Metallen wie Stahl oder Aluminium. Dabei bieten die faserverstärkten Kunststoffe eine gute Festigkeit und Steifigkeit bei gleichzeitig geringem Gewicht. Das macht ihren Einsatz insbesondere im Kraftfahrzeugbereich, bei Windkrafträdern und speziell im Flugzeugbau interessant, wo z. B. Profile aus faserverstärktem Kunststoff als Spanten in Passagierflugzeugen verwendet werden können.

Eine Herausforderung stellt die Herstellung solcher Profile dar, insbesondere bei komplexeren Geometrien, wie sie im Flugzeugbau regelmäßig erforderlich sind. Bei einem hohen Grad der geometrischen Komplexität erfolgt die Fertigung im Wesentlichen manuell, was einen hohen Aufwand bedeutet.

Es gibt aber auch Ansätze zu einer automatisierten Herstellung von Profilen aus faserverstärktem Kunststoff. In der Regel ist dabei eine Vorrichtung zur automatisierten Herstellung von Vorformlingen speziell auf eine bestimmte Geometrie des Profils zugeschnitten. So ist es üblich, bei einer gewünschten Längskrümmung des Profils diesen Krümmungsradius in der Anordnung aller Verarbeitungsstufen zu berücksichtigen. Zur Herstellung eines Profils mit einem anderen Krümmungsradius ist dann ein sehr aufwendiger Umbau erforderlich.

In der WO2011/039484 A1, DE 10 2012 206 020 A1 und der EP 2 722 145 A1 sind beispielsweise Vorrichtungen zum Herstellen von Vorformlingen beschrieben.

Aus dem Stand der Technik und speziell aus der DE 10 2010 014 704 A1, von welcher die vorliegende Erfindung ausgeht, ist eine Vorrichtung zur kontinuierlichen Herstellung von Vorformlingen aus faserverstärktem Kunststoff bekannt.

Hier wird aus einem aufgespulten Halbzeug durch Umformung ein Einzelprofil - der Vorformling, welcher auch als Sub-Preform bezeichnet werden kann - hergestellt, welches durch die Erhitzung eines Binders fixiert wird. Der Binder kann dabei grundsätzlich bereits im Halbzeug vorhanden sein - derartiges Halbzeug wird dann als Prepreg bezeichnet - oder im Rahmen der Vorrichtung auf das Halbzeug aufgetragen werden. Mehrere solche Einzelprofile können dann zu einem Gesamtprofil zusammengesetzt werden, welches auch als Final-Preform bezeichnet wird.

Die aus dem Stand der Technik bekannte Vorrichtung trennt den Schritt der Querumformung von dem der Längsumformung. Auf diese Weise kann eine Anpassung des Radius der Längsumformung erfolgen, welche keinen Umbau der vorangehenden Verarbeitungsabschnitte erforderlich macht.

Nachteilig an einer solchen Vorrichtung ist jedoch, dass der Zugewinn an Flexibilität hinsichtlich der Geometrie herstellbarer Profile gering ist.

Vor diesem Hintergrund besteht die Aufgabe der Erfindung darin, die Flexibilität bei der automatisierten Herstellung von Vorformlingen aus faserverstärktem Kunststoff zu erhöhen.

Das genannte Problem wird bei einer Vorrichtung zur Herstellung von Vorformlingen aus faserverstärktem Kunststoff mit den Merkmalen des Oberbegriffs von Anspruch 1 durch die Merkmale des kennzeichnenden Teils von Anspruch 1 gelöst. Ebenso wird das Problem bei einem Verfahren zur Herstellung von Vorformlingen aus faserverstärktem Kunststoff mit den Merkmalen des Oberbegriffs von Anspruch 15 durch die Merkmale des kennzeichnenden Teils von Anspruch 15 gelöst.

Wesentlich für die Erfindung ist die Erkenntnis, dass durch eine Verstellung derjenigen Komponente, welche das Umformen des Querschnitts zum Soll-Profil bewirkt, dieses Soll-Profil hinsichtlich seines Querschnitts angepasst werden kann. Damit wird eine Variabilität der Querumformung ermöglicht, welche ohne einen aufwendigen Umbau dieser Komponente oder gar der Gesamtvorrichtung zur Herstellung auskommt.

Gemäß der bevorzugten Ausgestaltung nach Unteranspruch 2 kann ein solches Verstellen auch während des Zuführens und damit gleichsam "online" erfolgen.

Dadurch ist auch ein veränderliches Soll-Profil an einem einzelnen Vorformling realisierbar.

Gemäß dem Unteranspruch 5 kann die obige Veränderung des Soll-Profils insbesondere eine Steghöhe des Soll-Profils betreffen.

Die Unteransprüche 6 bis 10 beschreiben eine Drapiervorrichtung mit einem Formkern aus zwei Formkernteilen, welche durch eine relative Schwenkbewegung verstellbar sind und bei denen durch diese Verschwenkung das Soll-Profil definiert bzw. verändert werden kann.

Die Unteransprüche 11 bis 14 wiederum beschreiben verschiedene vorteilhafte Ausgestaltungen von Rollenanordnungen der Drapiervorrichtung, mit denen die Querumformung befördert werden kann.

Weitere Einzelheiten, Merkmale, Ziele und Vorteile der vorliegenden Erfindung werden nachfolgend anhand einer lediglich ein Ausführungsbeispiel wiedergebenden Zeichnung näher erläutert. In der Zeichnung zeigt
- Fig. 1: eine schematische Seitenansicht eines Ausführungsbeispiels einer vorschlagsgemäßen Vorrichtung zur Herstellung von Vorformlingen mit einer Querumformungsanordnung,
- Fig. 2a, b: jeweils eine Perspektivansicht eines Formkerns der Drapiervorrichtung der Querumformungsanordnung aus der Fig. 1 mit unterschiedlichen Verstellungen,
- Fig. 3: eine Perspektivansicht des Formkerns der Fig. 2a, b mit zugeordneten Rollen der Drapiervorrichtung,
- Fig.4: eine Perspektivansicht eines Linearantriebs der Querumformungsanordnung aus der Fig. 1 zur Verstellung des Formkerns aus der Fig. 2a, b und
- Fig. 5a, b: zwei Soll-Profile eines Vorformlings mit jeweils unterschiedlichem Querschnitt, wobei der Vorformling durch die vorschlagsgemäße Vorrichtung der Fig. 1 hergestellt wurde.

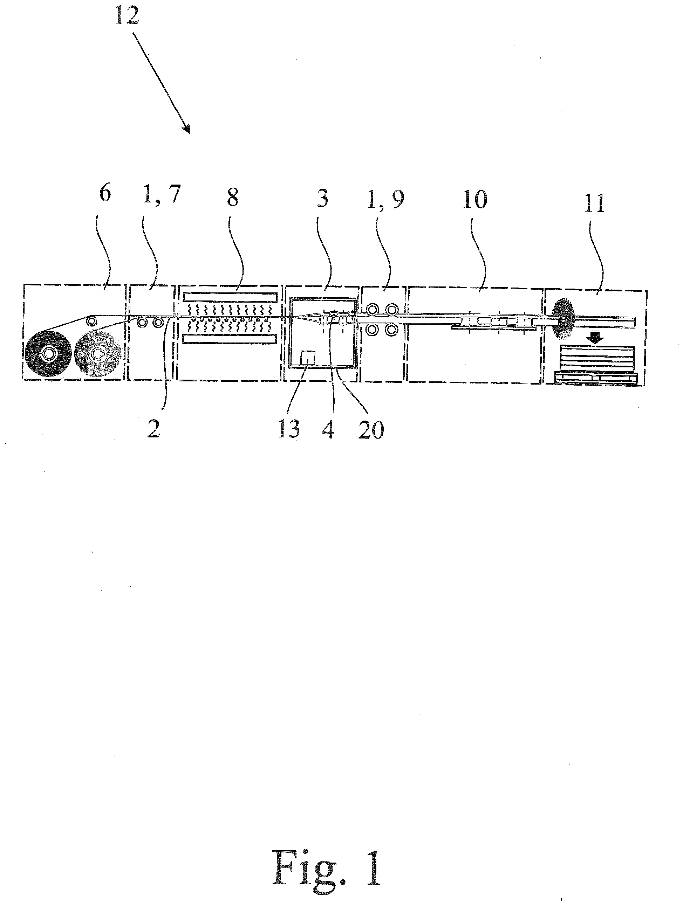

Die Fig.1 zeigt ein Ausführungsbeispiel einer vorschlagsgemäßen Vorrichtung zur Herstellung von faserverstärktem Kunststoff. Die vorschlagsgemäße Vorrichtung weist eine Zuführanordnung 1 zum kontinuierlichen Zuführen eines Fasergeleges 2 auf. Bei dem Fasergelege 2 handelt es sich vorliegend um ein mit einem thermoplastischen Pulver bebindertes Fasermaterial und damit um ein Faser-Matrix-Halbzeug, welches auch als Prepreg bezeichnet wird.

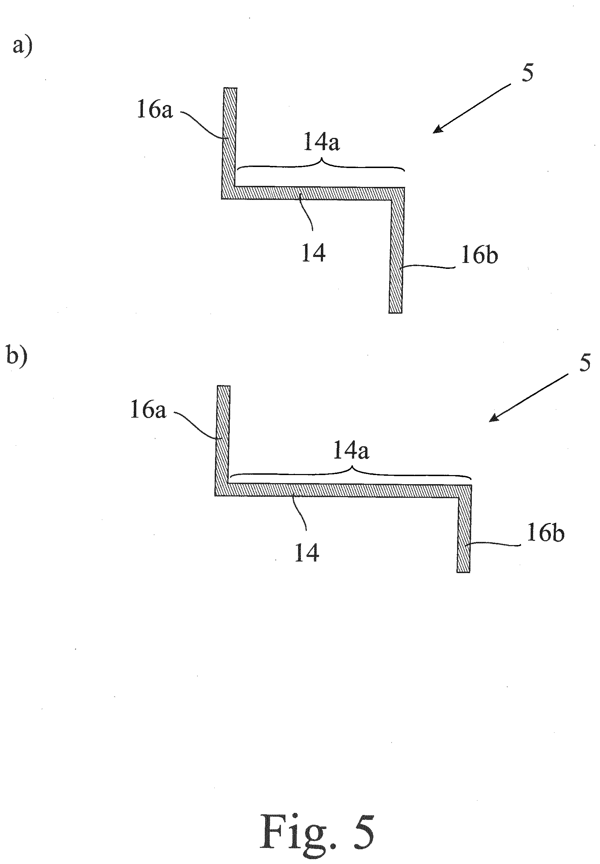

Die vorschlagsgemäße Vorrichtung weist ebenso eine Querumformungsanordnung 3 mit einer Drapiervorrichtung 4 zum Umformen des zugeführten Fasergeleges 2 zu einem vorgegebenen Soll-Profil 5 auf. Zwei solche Soll-Profile 5 mit einem jeweils unterschiedlichen Querschnitt sind in den Fig. 5a, b dargestellt. Daneben können auch weitere Bearbeitungsschritte in der Querumformungsanordnung 3 vorgenommen werden.

Die vorschlagsgemäße Vorrichtung ist nun dadurch gekennzeichnet, dass die Drapiervorrichtung 4 zu einer Veränderung eines Querschnitts des Soll-Profils 5 verstellbar ist. Diese Verstellbarkeit der Drapiervorrichtung 4 kann dabei sowohl eine Verstellung der Drapiervorrichtung 4 gegenüber einer separaten Struktur der Querumformungsanordnung 3 als auch eine Verstellung von Bestandteilen der Drapiervorrichtung 4 zueinander - also gleichsam eine interne Verstellung - umfassen. Erforderlich ist lediglich, dass eine Verstellung möglich ist, welche zu einer Veränderung eines Querschnitts des Soll-Profils 5 führt, zu dem die Drapiervorrichtung 4 das zugeführte Fasergelege 2 umformt.

Bezug nehmend auf die Fig. 1 wird kurz die Vorrichtung gemäß dem Ausführungsbeispiel insgesamt beschrieben. In Förder- und Verarbeitungsrichtung vorgehend weist die Vorrichtung eine Materialbevorratung 6 auf, durch die das Fasergelege 2 von Vorratsrollen bereitgestellt wird. Dieser Materialbevorratung 6 schließt sich eine Führungsanordnung 7 und an diese wiederum eine Heizanordnung 8 an. Auf diese folgt dann die bereits genannte Querumformungsanordnung 3. Weiter in Förderrichtung folgt dann eine Förderantriebsanordnung 9, durch welche das Fasergelege 2 aus der Materialbevorratung 6 gezogen und entsprechend weitergefördert wird. Im vorliegenden Ausführungsbeispiel kann sowohl die Führungsanordnung 7 als auch die Förderantriebsanordnung 9 als Bestandteil der Zuführanordnung 1 verstanden werden. Schließlich folgen noch eine Längsumformungsanordnung 10 sowie eine Trennanordnung 11 zur Längstrennung der Vorformlinge. Die beschriebene Vorrichtung bildet dabei einen Strang 12. Denkbar sind auch Vorrichtungen mit mehreren solchen Strängen 12, wobei diese regelmäßig übereinander angeordnet sind. Jeder einzelne Strang 12 dient dabei der Herstellung eines - jeweils unterschiedlichen - Einzelprofils, wobei dann die verschiedenen Einzelprofile zu einem Gesamtprofil verbunden werden können.

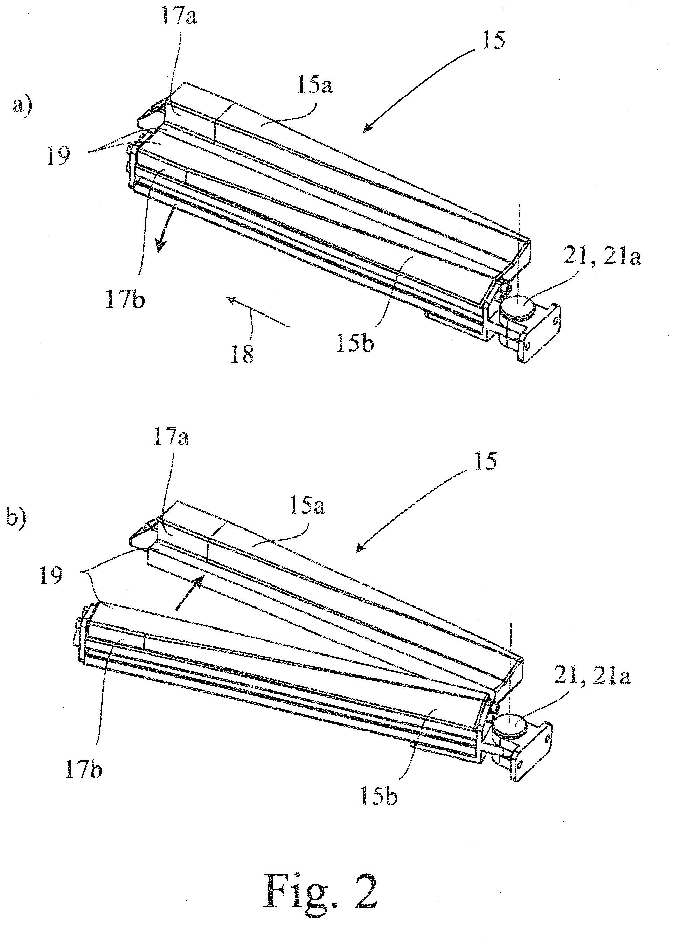

Wesentliche Bestandteile der Drapiervorrichtung 4 der vorschlagsgemäßen Vorrichtung sind in den Fig. 2a, b sowie 3 und 4 dargestellt, auf welche nachfolgend Bezug genommen wird.

Bevorzugt ist, dass die Drapiervorrichtung 4 während eines Zuführens des Fasergeleges 2 an die Drapiervorrichtung 4 verstellbar ist. Dies kann auch als "online"-Verstellbarkeit bezeichnet werden. Dies ermöglicht nicht nur eine rasche Umstellung von einem Soll-Profil 5 zu einem anderen, so z. B. von dem Soll-Profil 5 der Fig. 5a zu demjenigen der Fig. 5b, sondern auch das Vorsehen von Soll-Profilen 5 mit einem unterschiedlichen Querschnitt an ein und demselben Vorformling. Es können also Vorformlinge mit abschnittsweise unterschiedlichem Querschnitt hergestellt werden.

Insbesondere für eine solche Verstellung während des Zuführens bietet sich eine elektronische Steuerung an. Daher ist es bevorzugt, dass die Querumformungsanordnung 2 eine elektronische Steueranordnung 13 zum Verstellen der Drapiervorrichtung 4 aufweist. Diese elektronische Steueranordnung 13 kann auch durch eine Zentralrecheneinheit gebildet werden, welche alle steuerungstechnischen Aufgaben für die vorschlagsgemäße Vorrichtung oder für mehrere solcher Vorrichtungen wahrnimmt.

Bevorzugt ist ebenso, dass die Vorrichtung eine der Querumformungsanordnung 4 zuführtechnisch vorgelagerte Heizanordnung 8 zum Aktivieren des Fasergeleges 2 umfasst, sodass das zu dem Soll-Profil 5 umgeformte Fasergelege 2 stabilisiert wird. Die Heizanordnung 8 - welche oben bereits erwähnt wurde - dient also zum Aktivieren des Binders, sodass der Vorgang des Umformens des Fasergeleges 2 mit einer Fixierung der dann erreichten Form verbunden wird.

Vorzugsweise ist die Drapiervorrichtung 4 zur Veränderung eines Stegs 14 und hier insbesondere zur Veränderung einer Steghöhe 14a des Soll-Profils 5 verstellbar. Eine entsprechende Veränderung des Stegs 14 bzw. der Steghöhe 14a ist in den Fig. 5a. und 5b dargestellt.

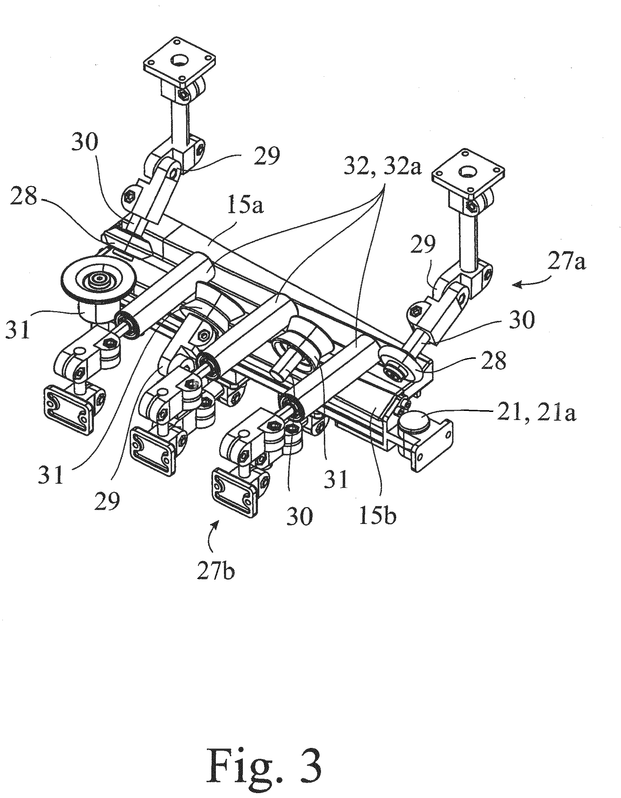

Wie in den Fig. 2a, b und 3 dargestellt - weist die Drapiervorrichtung 4 einen Formkern 15 mit einem ersten Formkernteil 15a und einem zweiten Formkernteil 15b auf, wobei zur Veränderung des Soll-Profils 5 der erste Formkernteil 15a und der zweite Formkernteil 15b zueinander verstellbar sind. Eine solche Verstellung kann beispielsweise aus dem Übergang von der relativen Lage der Formkernteile 15a, b gemäß der Fig. 2a in die relative Lage der Formkernteile 15a, b gemäß der Fig, 2b entsprechen. Grundsätzlich kann der Formkern 15 auch weitere, ebenfalls zueinander verstellbare Formkernteile aufweisen. Das Fasergelege 2 wird also über den Formkern 15 drapiert und nimmt dabei einen Querschnitt an, welcher durch den Formkern 15 definiert wird.

Aus den Fig. 2a, b ist die Ausgestaltung erkennbar, nach welcher zur Veränderung des Stegs 14 des Soll-Profils 5 der erste Formkernteil 15a und der zweite Formkernteil 15b zueinander verstellbar sind. Speziell wird die Steghöhe 14a hier dadurch bestimmt, wie weit auseinander der erste Formkernteil 15a von dem zweiten Formkernteil 15b verstellt ist.

Aus einer Zusammenschau der Fig. 2a, b und der Fig. 5 ist zu erkennen, dass vorzugsweise der erste Formkernteil 15a zum Herstellen eines ersten Flansches 16a des Soll-Profils 5 und alternativ oder zusätzlich der zweite Formkernteil 15b zum Herstellen eines zweiten Flansches 16b des Soll-Profils 5 eingerichtet ist. Dies wird bevorzugt dadurch erreicht, dass der erste Formkernteil 15a und/oder der zweite Formkernteil 15b eine jeweilige Flanke 17a, b zum Herstellen des ersten Flansches 16a bzw. des zweiten Flansches 16b aufweist Die Flansche 16a, b entstehen also durch ein Drapieren des Fasergeleges 2 über die jeweiligen Flanken 17a, b.

Um einen möglichst belastungsfreien Übergang zu erlauben ausgehend von dem regelmäßig ebenen Querschnitt des Fasergeleges 2 so, wie es der Querumformungsanordnung 4 zugeführt wird, steigt vorzugsweise die jeweilige Flanke 17a, b in einer Zuführrichtung 18 rampenartig aus einer Horizontalebene 19 des ersten Formkernteils 15a bzw. des zweiten Formkernteils 15b an. Dies ist in den Fig. 2a, b zu erkennen. Dabei entspricht die Horizontalebene 19 demjenigen Abschnitt des Formkerns 15, über welchen der dem Steg 14 entsprechende Teil des Fasergeleges 2 drapiert wird.

Um die Drapiervorrichtung 4 ausreichen stützen zu können ist bevorzugt vorgesehen, dass die Querumformungsanordnung 4 einen Rahmen 20 zur Aufnahme der Drapiervorrichtung 4 aufweist. Dieser Rahmen 20 kann insbesondere ortsfest fixiert sein. Vorzugsweise ist auch der erste Formkernteil 15a starr mit dem Rahmen 20 verbunden. Somit reicht es, wenn nur ein Formkernteil des Formkerns 15 beweglich ist.

Bezüglich dieser Bewegung der Formkernteile 15a, b ist bevorzugt vorgesehen, dass der erste Formkernteil 15a und der zweite Formkernteil 15b zueinander schwenkbar sind. Die Fig. 2a und 2b verdeutlichen eine solche scherenartige Schwenkbewegung. Vorzugsweise sind der erste Formkernteil 15a und der zweite Formkernteil 15b über eine Schwenkverbindung 21 zueinander schwenkbar. Dabei muss diese Schwenkverbindung 21 nicht zwischen den Formkernteilen 15a, b bestehen. Bevorzugt ist, gemäß der Darstellung in den Fig. 2a, b, dass der zweite Formkernteil 15b über die Schwenkverbindung 21, bei welches es sich hier um eine Gelenk-Gabelverbindung 21a handelt, mit dem Rahmen 20 verbunden ist. Wenn gemäß einer bevorzugten Variante der Formkern 15 länglich ist, kann die Schwenkverbindung 21 an einem Längsende des Formkerns 15 angeordnet sein.

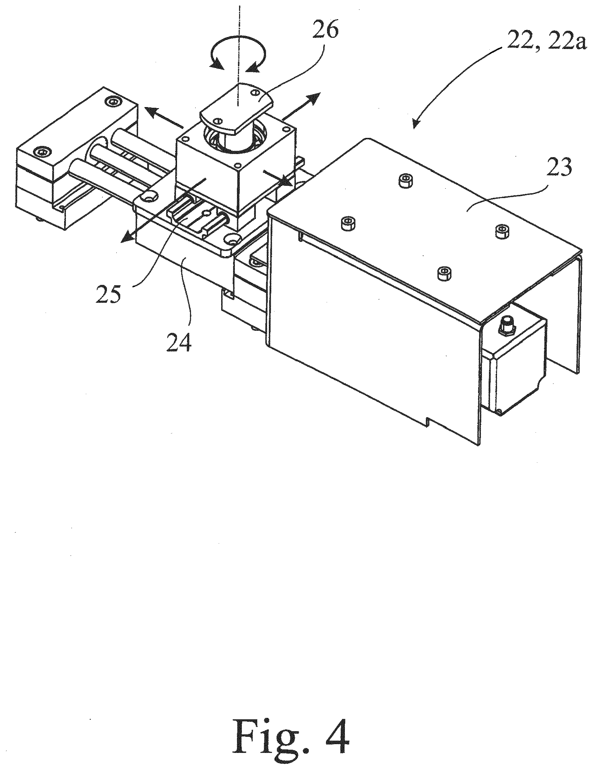

Zum Bewirken der vorschlagsgemäßen Verstellung weist die Drapiervorrichtung 4 bevorzugt einen Linearantrieb 22 zur Verstellung des ersten Formkernteils 15a und des zweiten Formkernteils 15b zueinander auf. Ein solcher Linearantrieb 22, bei dem es sich vorliegend um einen Schrittmotor 22a handelt, ist in der Fig. 4 dargestellt. Für eine gute Hebelwirkung greift der Linearantrieb 22 zur Verstellung bevorzugt beanstandet zu der Schwenkverbindung 21 an. Zur Abschirmung gegenüber der z. B. von der Heizanordnung 8 erzeugten Hitze weist der Linearantrieb bevorzugt einen Hitzeschutz 23 auf. Der Linearantrieb 22 treibt dabei eine aktive Lineareinheit 24 entlang einer linearen Bahn an.

Im vorliegenden Ausfuhrungsbeispiel treibt der Linearantrieb 22 den zweiten Formkernteil 15b an. Gemäß der obigen Schwenkverbindung 21 führt der zweite Formkernteil 15b eine Kreisbewegung aus. Zum Ausgleich der jeweiligen Bewegungsbahnen weist der Linearantrieb 22 noch eine passive Lineareinheit 25 sowie eine gelagerte Führungswelle 26 zwischen der aktiven Lineareinheit 24 und dem zweiten Formkernteil 15b auf.

Um das Fasergelege 2 möglichst genau auf den Formkern 15 drapieren und das Fasergelege 2 entsprechend umlenken zu können, weist die Drapiervorrichtung 4 eine erste Rollenanordnung 27a zur Querschnittsfixierung des Fasergeleges 2 auf. Zusätzlich kann die Drapiervorrichtung 4 eine zweite Rollenanordnung 27b zur Querschnittsfixierung des Fasergeleges 2 aufweisen. Dieser Sachverhalt ist in der Fig. 3 illustriert.

Bevorzugt ist dabei vorgesehen, dass die erste Rollenanordnung 27a Konvexrollen 28 umfasst, welche insbesondere zum Herstellen des ersten Flansches 16a dienen können, und zwar durch Führen des Fasergeleges 2 an die entsprechende Flanke 17a. Gemäß der Fig. 3 ist die erste Rollenanordnung 27a dabei oberhalb des ersten Formkernteils 15a angeordnet und - wie dieser - starr mit dem Rahmen 20 verbunden ist, und zwar vorliegend über Klemmverbindern 29. Um eine geringe Reibung zwischen den Konvexrollen 28 und dem Fasergelege 2 zu erreichen, sind ferner Gleitlageradapter 30 zwischen den Konvexrollen 28 und den Klemmverbindern 29 vorgesehen. Bevorzugt und wie aus der Fig. 3 erkennbar folgt die erste Rollenanordnung 27a in ihrer Ausrichtung dem rampenartigen Ansteigen der Flanke 17a des ersten Formkernteils 15a.

Eine entsprechende und bevorzugte Ausgestaltung der zweiten Rollenanordnung 27b sieht vor, dass diese Konkavrollen 31 umfasst. Diese dienen bevorzugt dem Herstellen des zweiten Flansches 16b, wobei weiter bevorzugt ist, dass die zweite Rollenanordnung 27b oberhalb des zweiten Formkernteils 15b angeordnet und starr mit dem zweiten Formkernteil 15b verbunden ist. Auf diese Weise kann die zweite Rollenanordnung 27b einer Bewegung des zweiten Formkernteils 15b folgen. Die Verbindung zu dem zweiten Formkernteil 15b erfolgt ebenfalls über Klemmverbinder 29, was eine variable Einstellung der Konkavrollen 31 erlaubt. Auch für die zweite Rollenanordnung 27b sind bevorzugt Gleitlageradapter 30 zur Verringerung der Reibung vorgesehen. Bevorzugt ist ferner, dass die zweite Rollenanordnung 27b dem rampenartigen Ansteigen der Flanke 17b des zweiten Formkernteils 15b folgt, wie ebenfalls in der Fig. 3 zu erkennen ist.

Neben diesen, oben beschriebenen Rollenanordnungen 27a, b, welche die genaue Ausbildung des gewünschten Querschnitts befördern sollen, kann bevorzugt die Drapiervorrichtung 4 eine Glättungsanordnung 32 zum Glätten des zugeführten Fasergeleges 2 aufweisen, welche Glättungsanordnung 32 bevorzugt horizontale Führungsrollen 32a aufweist. Es soll auf diese Weise also das Auftreten von Wellen o.dgl. vermieden werden. Daher ist die Glättungsanordnung 32 bevorzugt im Bereich des Stegs 14 angeordnet.

Bei einem vorschlagsgemäßen Verfahren zur Herstellung von Vorformlingen aus faserverstärktem Kunststoff wird ein Fasergelege 2 kontinuierlich an eine Drapiervorrichtung 4 zum Umformen des Fasergeleges zu einem vorgegebenen Soll-Profil 5 zugeführt.

Das vorschlagsgemäße Verfahren ist dadurch gekennzeichnet, dass die Drapiervorrichtung 4 zur Veränderung eines Querschnitts des Soll-Profils 5 verstellt wird.

Bevorzugte Ausgestaltungen des vorschlagsgemäßen Verfahrens ergeben sich aus den obigen bevorzugten Ausgestaltungen der vorschlagsgemäßen Vorrichtung.

## Patentansprüche

1. Vorrichtung zur Herstellung von Vorformlingen aus faserverstärktem Kunststoff mit einer Zuführanordnung (1) zum kontinuierlichen Zuführen eines Fasergeleges (2) und einer Querumformungsanordnung (3) mit einer Drapiervorrichtung (4) zum Umformen des zugeführten Fasergeleges (2) zu einem vorgegebenen Soll-Profil (5),
wobei die Drapiervorrichtung (4) zu einer Veränderung eines Querschnitts des Soll-Profils (5) verstellbar ist, **dadurch gekennzeichnet, dass** die Drapiervorrichtung (4) einen Formkern (15) mit einem ersten Formkernteil (15a) und einem zweiten Formkernteil (15b) aufweist, wobei zur Veränderung des Soll-Profils (5) der erste Formkernteil (15a) und der zweite Formkernteil (15b) zueinander verstellbar sind und wobei die Drapiervorrichtung (4) eine erste Rollenanordnung (27a) zur Querschnittsfixierung des Fasergeleges (2) aufweist.

2. Vorrichtung nach Anspruch 1, **dadurch gekennzeichnet, dass** die Drapiervorrichtung (4) während eines Zuführens des Fasergeleges (2) an die Drapiervorrichtung (4) verstellbar ist

3. Vorrichtung nach Anspruch 1 oder 2, **dadurch gekennzeichnet, dass** die Querumformungsanordnung (2) eine elektronische Steueranordnung (13) zum Verstellen der Drapiervorrichtung (4) aufweist.

4. Vorrichtung nach einem der Ansprüche 1 bis 3, **dadurch gekennzeichnet, dass** die Vorrichtung eine der Querumformungsanordnung (4) zuführtechnisch vorgelagerte Heizanordnung (8) zum Aktivieren des Fasergeleges (2) umfasst, sodass das zu dem Soll-Profil (5) umgeformte Fasergelege (2) stabilisiert wird.

5. Vorrichtung nach einem der Ansprüche 1 bis 4, **dadurch gekennzeichnet, dass** die Drapiervorrichtung (4) zur Veränderung eines Stegs (14), insbesondere einer Steghöhe (14a), des Soll-Profils (5) verstellbar ist.

6. Vorrichtung nach einem der Ansprüche 1 bis 5, **dadurch gekennzeichnet, dass** die Drapiervorrichtung (4) einen Formkern (15) mit einem ersten Formkernteil (15a) zum Herstellen eines ersten Flansches (16a) des Soll-Profils (5) und einem zweiten Formkernteil (15b), vorzugsweise zum Herstellen eines zweiten Flansches (16b) des Soll-Profils (5), aufweist und dass zur Veränderung des Soll-Profils (5) der erste Formkernteil (15a) und der zweite Formkernteil (15b) zueinander verstellbar sind, insbesondere, dass zur Veränderung des Stegs (14) des Soll-Profils (5) der erste Formkernteil (15a) und der zweite Formkernteil (15b) zueinander verstellbar sind.

7. Vorrichtung nach Anspruch 6, **dadurch gekennzeichnet, dass** der erste Formkernteil (15a) und/oder der zweite Formkernteil (15b) eine jeweilige Flanke (17a, b) zum Herstellen des ersten Flansches (16a) bzw. des zweiten Flansches (16b) aufweist, vorzugsweise, dass die jeweilige Flanke (17a, b) in einer Zuführrichtung (18) rampenartig aus einer Horizontalebene (19) des ersten Formkernteils (15a) bzw. des zweiten Formkernteils (15b) ansteigt.

8. Vorrichtung nach Anspruch 6 oder 7, **dadurch gekennzeichnet, dass** die Querumformungsanordnung (4) einen Rahmen (20) zur Aufnahme der Drapiervorrichtung (4) aufweist, vorzugsweise, dass der erste Formkernteil (15a) starr mit dem Rahmen (20) verbunden ist.

9. Vorrichtung nach einem der Anspruch 6 bis 8, **dadurch gekennzeichnet, dass** der erste Formkernteil (15a) und der zweite Formkernteil (15b), vorzugsweise über eine Schwenkverbindung (21) zueinander schwenkbar sind, vorzugsweise, dass der zweite Formkernteil (15b) über die Schwenkverbindung (21) mit dem Rahmen (20) verbunden ist, insbesondere, dass der Formkern (15) länglich ist und die Schwenkverbindung (21) an einem Längsende des Formkerns (15) angeordnet ist.

10. Vorrichtung nach einem der Ansprüche 6 bis 9, **dadurch gekennzeichnet, dass** die Drapiervorrichtung (4) einen Linearantrieb (22) zur Verstellung des ersten Formkernteils (15a) und des zweiten Formkernteils (15b) zueinander aufweist, vorzugsweise, dass der Linearantrieb (22) zur Verstellung beabstandet zu der Schwenkverbindung (21) angreift.

11. Vorrichtung nach einem der Ansprüche 6 bis 10, **dadurch gekennzeichnet, dass** die Drapiervorrichtung (4) eine zweite Rollenanordnung (27b) zur Querschnittsfixierung des Fasergeleges (2) aufweist.

12. Vorrichtung nach Anspruch 11, **dadurch gekennzeichnet, dass** die erste Rollenanordnung (27a) Konvexrollen (28), vorzugsweise zum Herstellen des ersten Flansches (16a), umfasst, weiter vorzugsweise, dass die erste Rollenanordnung (27a) oberhalb des ersten Formkernteils (15a) angeordnet ist und starr mit dem Rahmen (20) verbunden ist, insbesondere, dass die erste Rollenanordnung (27a) in ihrer Ausrichtung dem rampenartigen Ansteigen der Flanke (17a) des ersten Formkernteils (15a) folgt.

13. Vorrichtung nach Anspruch 11 oder 12, **dadurch gekennzeichnet, dass** die zweite Rollenanordnung (27b) Konkavrollen (31), vorzugsweise zum Herstellen des zweiten Flansches (16b), umfasst, weiter vorzugsweise, dass die zweite Rollenanordnung (27b) oberhalb des zweiten Formkernteils (15b) angeordnet ist und starr mit dem zweiten Formkernteil (15b) verbunden ist, insbesondere, dass die zweite Rollenanordnung (27b) dem rampenartigen Ansteigen der Flanke (17b) des zweiten Formkernteils (15b) folgt.

14. Vorrichtung nach einem der Ansprüche 1 bis 13, **dadurch gekennzeichnet, dass** die Drapiervorrichtung (4) eine Glättungsanordnung (32), vorzugsweise umfassend horizontale Führungsrollen (32a), zum Glätten des zugeführten Fasergeleges (2), insbesondere im Bereich des Stegs (14), aufweist.

15. Verfahren zur Herstellung von Vorformlingen aus faserverstärktem Kunststoff mit einer Vorrichtung nach einem der vorhergehenden Ansprüche, wobei ein Fasergelege (2) kontinuierlich an die Drapiervorrichtung (4) zum Umformen des Fasergeleges (2) zu einem vorgegebenen Soll-Profil (5) zugeführt wird, **dadurch gekennzeichnet,**
**dass** die Drapiervorstellung (4) zur Veränderung eines Querschnitts des Soll-Profils (5) verstellt wird.

## Claims

1. Apparatus for the production of parisons from fiber-reinforced plastic, having a feed arrangement (1) for the continuous feed of a laid fiber fabric (2) and having a transverse deformation arrangement (3) with a draping apparatus (4) for the deformation of the fed laid fiber fabric (2) to form a predefined nominal profile (5),
wherein the draping apparatus (4) is adjustable for a variation of a cross section of the nominal profile (5), **characterized in that**
the draping apparatus (4) has a mold core (15) with a first mold core part (15a) and a second mold core part (15b), wherein, for the variation of the nominal profile (5), the first mold core part (15a) and the second mold core part (15b) are adjustable relative to one another and wherein the draping apparatus (4) has a first roller arrangement (27a) for the cross-sectional fixing of the laid fiber fabric (2).

2. Apparatus according to Claim 1, **characterized in that** the draping apparatus (4) is adjustable during a feed of the laid fiber fabric (2) to the draping apparatus (4).

3. Apparatus according to Claim 1 or 2, **characterized in that** the transverse deformation arrangement (2) has an electronic control arrangement (13) for the adjustment of the draping apparatus (4).

4. Apparatus according to one of Claims 1 to 3, **characterized in that** the apparatus comprises a heating arrangement (8) which is positioned upstream of the transverse deformation arrangement (4) in terms of the feed movement and which serves for the activation of the laid fiber fabric (2), such that the laid fiber fabric (2) that has been deformed to form the nominal profile (5) is stabilized.

5. Apparatus according to one of Claims 1 to 4, **characterized in that** the draping apparatus (4) is adjustable for the variation of a web (14), in particular of a web height (14a), of the nominal profile (5).

6. Apparatus according to one of Claims 1 to 5, **characterized in that** the draping apparatus (4) has a mold core (15) with a first mold core part (15a) for producing a first flange (16a) of the nominal profile (5) and a second mold core part (15b), preferably for the production of a second flange (16b) of the nominal profile (5), and **in that**, for the variation of the nominal profile (5), the first mold core part (15a) and the second mold core part (15b) are adjustable relative to one another, in particular **in that**, for the variation of the web (14) of the nominal profile (5), the first mold core part (15a) and the second mold core part (15b) are adjustable relative to one another.

7. Apparatus according to Claim 6, **characterized in that** the first mold core part (15a) and/or the second mold core part (15b) has a respective flank (17a, b) for the production of the first flange (16a) and of the second flange (16b) respectively, preferably **in that**, in a feed direction (18), the respective flank (17a, b) rises in ramp-like fashion out of a horizontal plane (19) of the first mold core part (15a) or of the second mold core part (15b) respectively.

8. Apparatus according to Claim 6 or 7, **characterized in that** the transverse deformation arrangement (4) has a frame (20) for receiving the draping apparatus (4), preferably wherein the first mold core part (15a) is rigidly connected to the frame (20).

9. Apparatus according to one of Claims 6 to 8, **characterized in that** the first mold core part (15a) and the second mold core part (15b) are pivotable relative to one another, preferably by way of a pivoting connection (21), preferably **in that** the second mold core part (15b) is connected by way of the pivoting connection (21) to the frame (20), in particular **in that** the mold core (15) is of elongate form and the pivoting connection (21) is arranged at one longitudinal end of the mold core (15).

10. Apparatus according to one of Claims 6 to 9, **characterized in that** the draping apparatus (4) has a linear drive (22) for the adjustment of the first mold core part (15a) and of the second mold core part (15b) relative to one another, preferably **in that** the linear drive (22) imparts an action, for adjustment purposes, at a distance from the pivoting connection (21).

11. Apparatus according to one of Claims 6 to 10, **characterized in that** the draping apparatus (4) has a second roller arrangement (27b) for the cross-sectional fixing of the laid fiber fabric (2).

12. Apparatus according to Claim 11, **characterized in that** the first roller arrangement (27a) comprises convex rollers (28), preferably for the production of the first flange (16a), furthermore preferably **in that** the first roller arrangement (27a) is arranged above the first mold core part (15a) and is rigidly connected to the frame (20), in particular **in that** the first roller arrangement (27a), in terms of its orientation, follows the ramp-like rise of the flank (17a) of the first mold core part (15a).

13. Apparatus according to Claim 11 or 12, **characterized in that** the second roller arrangement (27b) comprises concave rollers (31), preferably for the production of the second flange (16b), furthermore preferably **in that** the second roller arrangement (27b) is arranged above the second mold core part (15b) and is rigidly connected to the second mold core part (15b) , in particular **in that** the second roller arrangement (27b) follows the ramp-like rise of the flank (17b) of the second mold core part (15b).

14. Apparatus according to one of Claims 1 to 13, **characterized in that** the draping apparatus (4) has a smoothing arrangement (32), preferably comprising horizontal guide rollers (32a), for smoothing the fed laid fiber fabric (2), in particular in the region of the web (14).

15. Method for the production of parisons from fiber-reinforced plastic having an apparatus according to one of the preceding claims, wherein a laid fiber fabric (2) is fed continuously to the draping apparatus (4) for the deformation of the laid fiber fabric (2) to form a predefined nominal profile (5),
**characterized in that**
the draping apparatus (4) is adjusted for the variation of a cross section of the nominal profile (5).

## Revendications

1. Dispositif de fabrication de préformes en plastique renforcé par des fibres, comprenant un agencement d'alimentation (1) pour l'alimentation en continu d'une nappe fibreuse (2) et un agencement de formage transversal (3) avec un dispositif de drapage (4) pour former la nappe fibreuse acheminée (2) en un profil de consigne prédéfini (5),
le dispositif de drapage (4) pouvant être réglé pour modifier une section transversale du profil de consigne (5),
**caractérisé en ce que**
le dispositif de drapage (4) présente un noyau de formage (15) avec une première partie de noyau de formage (15a) et une deuxième partie de noyau de formage (15b), la première partie de noyau de formage (15a) et la deuxième partie de noyau de formage (15b), pour modifier le profil de consigne (5), pouvant être réglées l'une par rapport à l'autre et le dispositif de drapage (4) présentant un premier agencement à rouleau (27a) pour la fixation de la section transversale de la nappe fibreuse (2).

2. Dispositif selon la revendication 1, **caractérisé en ce que** le dispositif de drapage (4) peut être réglé pendant une alimentation de la nappe fibreuse (2) sur le dispositif de drapage (4).

3. Dispositif selon la revendication 1 ou 2, **caractérisé en ce que** l'agencement de formage de section transversale (2) présente un agencement de commande électronique (13) pour régler le dispositif de drapage (4).

4. Dispositif selon l'une quelconque des revendications 1 à 3, **caractérisé en ce que** le dispositif comprend un agencement de chauffage (8) monté par une technique d'alimentation en amont de l'agencement de formage de section transversale (4), pour activer la nappe fibreuse (2), de telle sorte que la nappe fibreuse (2) formée pour obtenir le profil de consigne (5) soit stabilisée.

5. Dispositif selon l'une quelconque des revendications 1 à 4, **caractérisé en ce que** le dispositif de drapage (4) peut être réglé pour modifier une nervure (14), en particulier une hauteur de nervure (14a), du profil de consigne (5) .

6. Dispositif selon l'une quelconque des revendications 1 à 5, **caractérisé en ce que** le dispositif de drapage (4) présente un noyau de formage (15) avec une première partie de noyau de formage (15a) pour réaliser une première bride (16a) du profil de consigne (5) et une deuxième partie de noyau de formage (15b), de préférence pour réaliser une deuxième bride (16b) du profil de consigne (5), et **en ce que** pour faire varier le profil de consigne (5), la première partie de noyau de formage (15a) et la deuxième partie de noyau de formage (15b) peuvent être réglées l'une par rapport à l'autre, en particulier **en ce que** pour faire varier la nervure (14) du profil de consigne (5), la première partie de noyau de formage (15a) et la deuxième partie de noyau de formage (15b) peuvent être réglées l'une par rapport à l'autre.

7. Dispositif selon la revendication 6, **caractérisé en ce que** la première partie de noyau de formage (15a) et/ou la deuxième partie de noyau de formage (15b) présentent un flanc respectif (17a, b) pour réaliser la première bride (16a), respectivement la deuxième bride (16b), de préférence **en ce que** le flanc respectif (17a, b) monte dans une direction d'alimentation (18) en forme de rampe depuis un plan horizontal (19) de la première partie de noyau (15a) ou de la deuxième partie de noyau (15b).

8. Dispositif selon la revendication 6 ou 7, **caractérisé en ce que** l'agencement de formage transversal (4) présente un cadre (20) pour recevoir le dispositif de drapage (4), de préférence **en ce que** la première partie de noyau de formage (15a) est connectée rigidement au cadre (20).

9. Dispositif selon l'une quelconque des revendications 6 à 8, **caractérisé en ce que** la première partie de noyau de formage (15a) et la deuxième partie de noyau de formage (15b) peuvent pivoter l'une par rapport à l'autre, de préférence par le biais d'une liaison pivotante (21), de préférence **en ce que** la deuxième partie de noyau de formage (15b) est connectée au cadre (20) par le biais de la liaison pivotante (21), en particulier **en ce que** le noyau de formage (15) est allongé et la liaison pivotante (21) est disposée au niveau d'une extrémité longitudinale du noyau de formage (15).

10. Dispositif selon l'une quelconque des revendications 6 à 9, **caractérisé en ce que** le dispositif de drapage (4) présente un entraînement linéaire (22) pour le réglage de la première partie de noyau de formage (15a) et de la deuxième partie de noyau de formage (15b) l'une par rapport à l'autre, de préférence **en ce que** l'entraînement linéaire (22) agit pour le réglage à distance de la liaison pivotante (21).

11. Dispositif selon l'une quelconque des revendications 6 à 10, **caractérisé en ce que** le dispositif de drapage (4) présente un deuxième agencement à rouleau (27b) pour la fixation de la section transversale de la nappe fibreuse (2).

12. Dispositif selon la revendication 11, **caractérisé en ce que** le premier agencement à rouleau (27a) comprend des rouleaux convexes (28), de préférence pour réaliser la première bride (16a), et en outre de préférence **en ce que** le premier agencement à rouleau (27a) est disposé au-dessus de la première partie de noyau de formage (15a) et est connecté rigidement au cadre (20), en particulier **en ce que** le premier agencement à rouleau (27a), dans son orientation, suit la montée de type rampe du flanc (17a) de la première partie de noyau de formage (15a).

13. Dispositif selon la revendication 11 ou 12, **caractérisé en ce que** le deuxième agencement à rouleau (27b) comprend des rouleaux concaves (31), de préférence pour réaliser la deuxième bride (16b), et en outre de préférence **en ce que** le deuxième agencement à rouleau (27b) est disposé au-dessus de la deuxième partie de noyau de formage (15b) et est connecté rigidement à la deuxième partie de noyau de formage (15b), en particulier **en ce que** le deuxième agencement à rouleau (27b) suit la montée de type rampe du flanc (17b) de la deuxième partie de noyau de formage (15b).

14. Dispositif selon l'une quelconque des revendications 1 à 13, **caractérisé en ce que** le dispositif de drapage (4) présente un agencement de lissage (32), de préférence comprenant des rouleaux de guidage horizontaux (32a), pour le lissage de la nappe fibreuse acheminée (2), en particulier dans la région de la nervure (14).

15. Procédé de fabrication de préformes en plastique renforcé par des fibres avec un dispositif selon l'une quelconque des revendications précédentes, dans lequel une nappe fibreuse (2) est acheminée en continu au dispositif de drapage (4) pour le formage de la nappe fibreuse (2) pour former un profil de consigne prédéfini (5),
**caractérisé en ce que**
le dispositif de drapage (4) est réglé pour modifier une section transversale du profil de consigne (5).
